# EUROPEAN PATENT APPLICATION

(11) **EP 1 909 512 A1**
(43) Date of publication of application: **09.04.2008**
(21) Application number: 06021095.2
(22) Date of filing: 06.10.2006
(51) Int. Cl.: H04Q 7/28, H04L 29/06

(54) **Method of holding off floor grant requests in push to talk clients**

(71) Applicant: Matsushita Electric Industrial Co., Ltd., Kadoma-shi Osaka 571-8501 (JP)
(72) Inventor: Cooper, D., Colthrop Thatcham Berkshire RG19 4ZB (GB); Stacey, D., Colthrop Thatcham Berkshire RG19 4ZB (GB)
(74) Representative: Grünecker, Kinkeldey, Stockmair & Schwanhäusser Anwaltssozietät

(57) **Abstract**

A method for controlling a communication floor between a group of clients of a Push to Talk over Cellular, referred to as PoC, communication system in a manner that only one PoC client is allowed to transmit data bursts at a time, comprising the step of requesting by one PoC client permission to transmit data packets using a Talk Burst Request message, the step of sending by the PoC server a Talk Burst Granted message to the requesting PoC client indicating a temporary exclusive right to transmit data bursts. The Talk Burst Granted message includes a holdoff indicator field indicating a holdoff time, which inhibits the requesting PoC client from sending another Talk Burst Request message to the PoC server until expiry of the holdoff time.

## Description

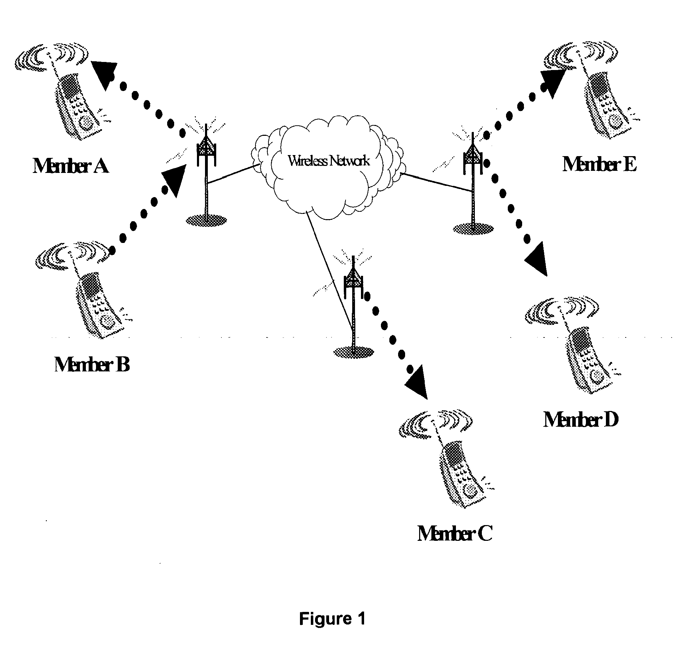

The OMA (Open Mobile Alliance) Push to talk over Cellular (PoC) system is intended to provide a wakie-talkie like function for users with cellular phones. PoC allows user voice and data communications between groups of recipients as illustrated in Figure 1, which is disclosed for instance in "Push to Talk over Cellular Architecture Draft Version 2.0, June 28, 2006".

In Push to Talk over Cellular, the mobile handset is referred to as a PoC Client and the network communicates with PoC Servers in the network. One of these servers performs a role called the 'PoC controlling function' and all PoC clients must request permission to speak, i.e. makes a request for the 'floor' to be granted from the PoC controlling function. Typically the user does this by pressing a button on the handset. When he gets permission to speak this is normally indicated to the user by an audible 'talk' tone. When a user speaks, he transmits a "Talk Burst".

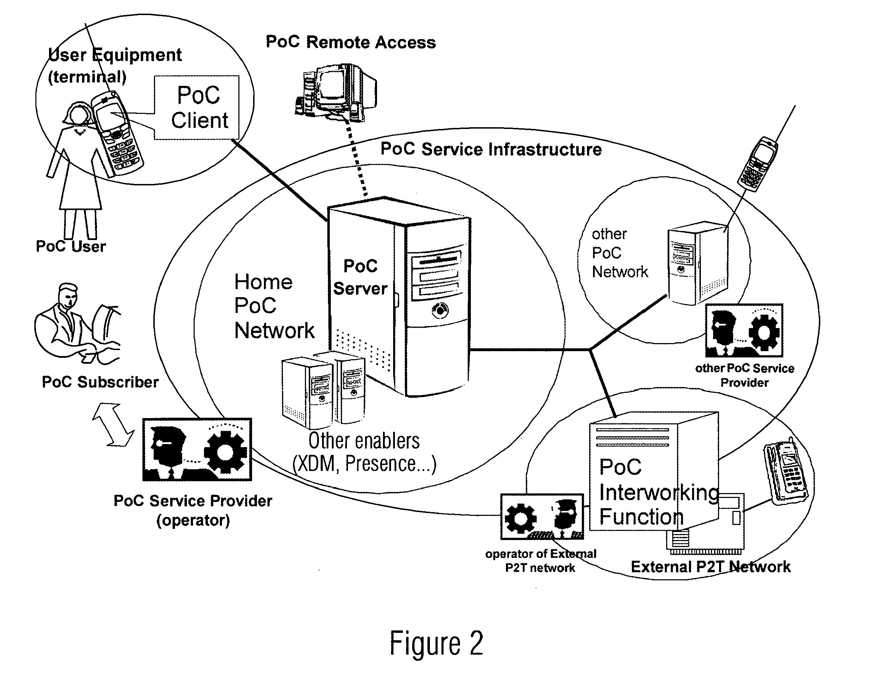

Figure 2, which has been taken from "Push to Talk over Cellular Requirements Draft Version 2.0 - August 20, 2006", illustrates the elements of a PoC system. The PoC user, normally a person, uses a 'User Equipment', which is typically a cellular telephone but may also be a fixed line or cordless handset, for communicating with other PoC users. The subscription for the service provided by the PoC system is held by the PoC subscriber, who may be but is not necessarily the same person as the PoC user. The PoC subscriber has a contractual relationship with the PoC Service provider or operator, who operates the Home PoC Network. Other PoC Users may belong to the same or different PoC Network. A PoC Network contains Service Infrastructure equipment including a PoC Server and possibly other services. Optionally the PoC Service infrastructure can connect to systems providing a similar capability via PoC Interworking Functions, and optionally non-standard equipment may connect to the PoC server via a PoC Remote Access capability.

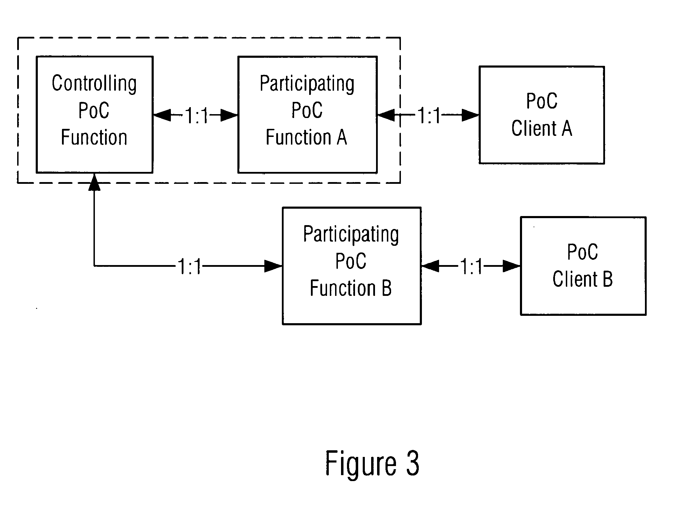

Each user's handset is called a "PoC Client". The PoC session itself is controlled by a "Controlling PoC function", or "PoC Controller", which performs management functions, such as admission and determining which user is allowed the floor. PoC clients communicate with the PoC Controller via a "Participating PoC Function". If the PoC client belongs to the same network as the Controlling PoC function, then the Controlling and Participating PoC function may be in one and the same entity. Otherwise they are different entities, and the Participating PoC function resides in the same network as the PoC Client. This is illustrated in Figure 3.

Permission to transmit talk bursts and other media is controlled by a signalling protocol called TBCP (talk burst control protocol) and the media is sent as RTP (real time transport protocol). This is described in detail in PoC User Plane Draft Version 2.0 - August 31, 2006. This protocol is concerned with control of the media floor, and among other procedures supports the following.

It provides a procedure for a PoC Client to request the 'floor' so it can transmit a talk burst to other clients, and for the PoC Server to grant this request. The PoC Server may, when granting the request, set a maximum duration of the subsequent talk burst.

It provides a procedure for the PoC Server to inform PoC clients that the 'floor' is free, i.e. when a PoC Client finishes sending a talk burst.

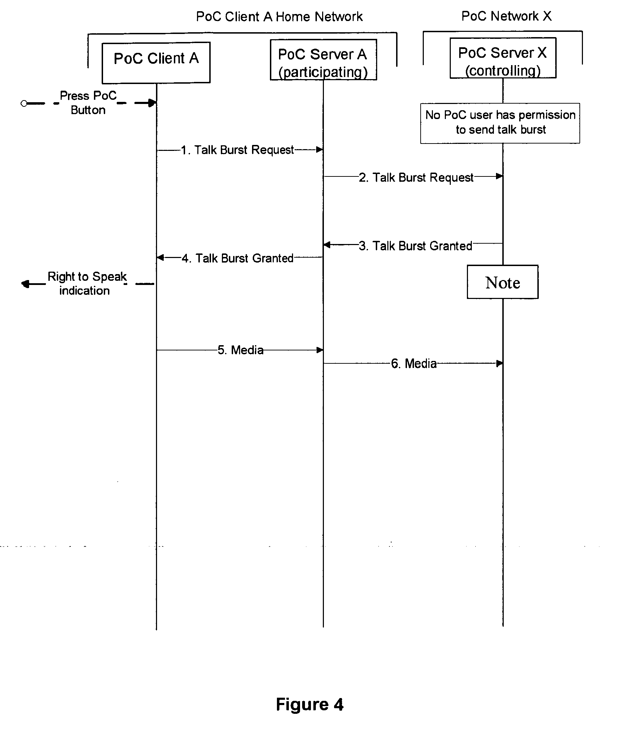

Figure 4 shows the TBCP message flow for the scenario where a PoC client requests the floor. The steps of the flow are as follows.
1. The PoC Client A sends a TBCP Talk Burst Request message towards the PoC Server X (controlling).
2. The PoC Server A (participating) and sends the TBCP Talk Burst Request message to PoC Server X (controlling).
3. The PoC Server X (controlling) determines that the PoC Client A can be given permission to send a Talk Burst and sends a TBCP Talk Burst Granted message, including information about the stop talking timer, towards the PoC Client A.
4. The PoC Server A (participating) sends the TBCP Talk Burst Request message to the PoC Client A.
5. When the PoC Client A receives the TBCP Talk Burst Granted message, it provides a Talk Burst granted notification, including information about the stop talking timer, to the PoC User A. The PoC Client A then begins to send RTP Media packets towards the PoC Server X (controlling).
6. The PoC Server A (participating) forwards the RTP Media packets to the PoC Server X (controlling).

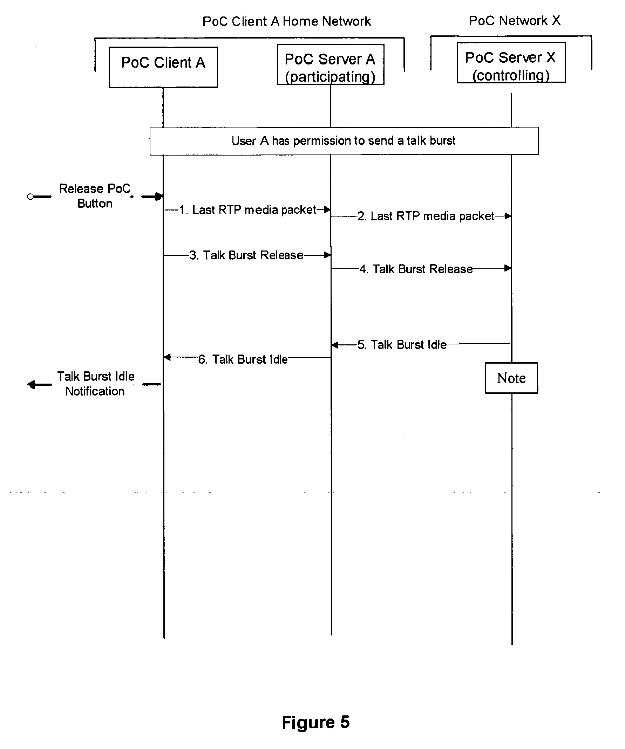

Figure 5 illustrates a Talk Burst Release Procedure, i.e. the message flow for the scenario when the floor becomes free. The steps of the flow are summarized as follows:
1. The PoC Client A sends the last RTP Media packet towards the PoC Server X (controlling).
2. The PoC Server A (participating) sends the last RTP Media packet to the PoC Server X (controlling).
3. After the last RTP packet has been sent, the PoC Client A sends a TBCP Talk Burst Release message towards the PoC Server X (controlling) to inform it that the Talk Burst is complete.
4. The PoC Server A (participating) sends the TBCP Talk Burst Release message to PoC Server X (controlling).
5. After that the PoC Server X (controlling) has forwarded the last RTP Media packet to all PoC Clients, it sends a TBCP Talk Burst Idle message to all PoC Clients in the PoC Session, including the PoC Client A.
6. The PoC Server A (participating) sends the TBCP Talk Burst Idle message to the PoC Client A. The PoC Client A sends a Talk Burst idle notification to the PoC User A.

The goal of the invention is to provide an effective method to address a well-known problem in the PoC floor control protocol. As apparent from the procedures outlined above, it is possible for a PoC Client, even if it is completely conformant with procedures defined for the RTCP protocol, to hijack or 'hog' the PoC Session, even if each talk burst is limited to a specific time.

This can happen as follows. Suppose the PoC server imposes a maximum talk burst length on the PoC client. Then there is nothing to stop the PoC client from transmitting just less that that maximum time, sending a Talk Burst Release message just before the time expires, and then immediately sending a new Talk Burst Request message. In this way it would keep hold of the floor indefinitely, since it would never overrun the time limit of each talk burst, but would be the only PoC Client that knew exactly when the floor was about to become free. Thus it could effectively hijack the session. The object of this invention is to allow the prevention of such behaviour.

This object is achieved by methods, a server and communication terminal according to the independent claims.

According to a first aspect of this invention, the server informs each client of an appropriate "holdoff time" whenever it sends the "Talk Burst Idle" message. This message is sent to every client when the floor becomes free. Each client, on receiving the "Talk Burst Idle" message, will examine the holdoff time, which may be expressed for example, in milliseconds. If this parameter indicates a non-zero "holdoff time", the client will wait this indicated amount of time before it sends a "Talk Burst Request".

This has the advantageous effect that the server can easily prevent a particular client from hijacking the session, for example by always sending a non-zero holdoff time to the client that has most recently had control of the floor, while allowing other clients to request the floor immediately.

This has another advantage that, if a particular client has faster response time and is unfairly often getting control of the floor, then the server can send a non-zero holdoff time to that client only. The server can detect if a particular client is failing to obtain the floor sufficiently often by keeping track of how often it rejects the "Talk burst request" messages from that client. When the server detects this it can reduce the holdoff timer for that client or if the holdoff timer is already set to zero, it can increase the holdoff time to all other clients.

According to another aspect of invention the holdoff time can be sent in the "Talk Burst Granted" message that is sent from the PoC Controller to the PoC Client to indicate that the floor has been granted to that client.

Furthermore, there is currently no mechanism to prevent a client from continually sending "Talk Burst Request" messages with intention of immediately grabbing the floor when it becomes available. In a further aspect of the invention, the holdoff time included in the "Talk Burst Deny" message, which is sent when a Talk Burst Request message is refused and can be used to control the rate at which a client continually sends speculative "Talk Burst Request" messages.

It is noted that the PoC Controlling Server has the option of sending, or not sending, a permitted duration for the talk burst in the "Talk Burst Granted" message. Therefore if no maximum time is indicated, there is the danger that the user may keep control of the floor for an unlimited period.

Thus, in another aspect a new message, "Talk Burst Modify", is defined, which can be sent at any time during the talk burst to the client that controls the floor. This can e.g. contain both a time indicating the maximum value of the remaining duration the talk burst, which would supercede any parameter value indicated in some earlier message and a holdoff time as described above.

In yet another aspect the POC Controlling Server can optionally set internal timers equal to the holdoff time whenever it sends a message to a client. If it receives a further "Talk Burst Request" message from that client prior to the expiry of the timer it will automatically deny that request and further may extend the holdoff time as a 'punishment' to that client.

The invention will be more appreciated from the following detailed description of preferred embodiments with reference to the accompanying figures, which show:
- **Figure 1**: illustrates an example of a Push to Talk over Cellular one-to-many group session;
- **Figure 2**: shows in further detail elements of a Push to Talk over Cellular system;
- **Figure 3**: illustrates the relationship between controlling PoC function, participating PoC functions and PoC clients;
- **Figure 4**: shows the message flow using signalling protocol TBCP for the scenario, where a PoC client requests the floor;
- **Figure 5**: illustrates a Talk Burst Release procedure for the scenario, where the floor becomes free;

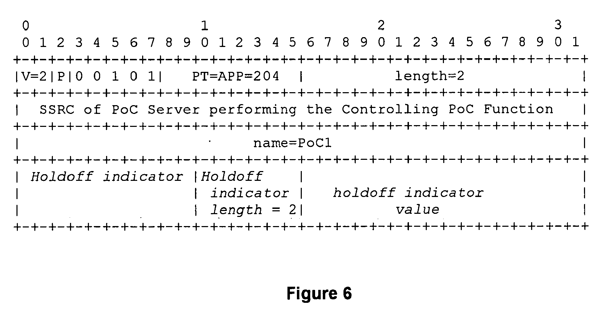

- **Figure 6**: illustrates a modified Talk Burst Idle message according to a first embodiment of the invention;
- **Figure 7**: shows a modified Talk Burst Granted message according to a further embodiment of the inventions;
- **Figure 8**: shows a modified Talk Burst Deny message according to a further embodiment of the invention; and
- **Figure 9**: shows a Talk Burst Modify message according to a further embodiment of the invention.

The following describes a first embodiment of this invention implemented in the OMA Push to Talk over cellular system, by modifying and extending the TBCP Talk Burst Idle message.

The extension is illustrated as additional fields shown in italics. The meaning of the conventional fields is defined in PoC User Plane Draft Version 2.0 - August 31, 2006.

The TBCP Talk Burst Idle message is sent from the PoC Server performing the Controlling PoC Function to participating PoC Clients signaling that no PoC Client has permission to send a Talk Burst. The additional field is called *'holdoff indicator'. The Holdoff indicator field* shall include a value which is a unique 10 bit code indicating that this information field is used to indicate a holdoff time, i.e. a period of time before which the client is allowed to send a Talk Burst Request message.

The Holdoff indicator length field shall be a 6-bit field indicating the length of this item, in bytes, having for instance, the value 2.

The Holdoff indicator value field shall be a 16-bit (2 byte) field that indicates a holdoff time, e.g. in seconds. Certain numerical values, for example, decimal 32767 or 32766, can be reserved for special purposes and as indicating indefinite holdoff or holding off until at least one other client has obtained the floor.

On receipt of the message, the PoC client would note the value provided of the Holdoff indicator and after the end of the talk burst would not send a Talk Burst Request message until at least this holdoff time has expired, even if the user indicates a wish to request the floor.

For example, suppose that a holdoff time of three seconds is required. Then the message would be consist of a set of 32 bit words defined as follows. The first three 32-bit words would be according to conventional definition. The fourth 32-bit word would have the following value, in binary notation:
*xxxxxxxxxx*0000100000000000000011

Where *xxxxxxxxxx* is the binary representation of the code used to denote the holdoff indicator, the binary value 000010 indicates the length of the holdoff indicator value field, and the holdoff indicator value field contains the binary value 0000000000000011.

Note that the users of the PoC clients need not necessarily be aware of this holdoff function. For example, if a user presses a button to request the floor before the holdoff time is expired, the PoC client could note the fact but could delay sending the corresponding TBCP Talk Burst Request message until the holdoff time has expired.

A further embodiment of the invention applies to the scenario where the Talk Burst Granted message is sent from the PoC Server to a PoC Client to indicate that it is granted control of the floor. As explained above, according to this aspect of the invention, a holdoff time indicator can be added to the Talk Burst Granted message. The improvement consists of adding a Holdoff indicator field at the end of this message.

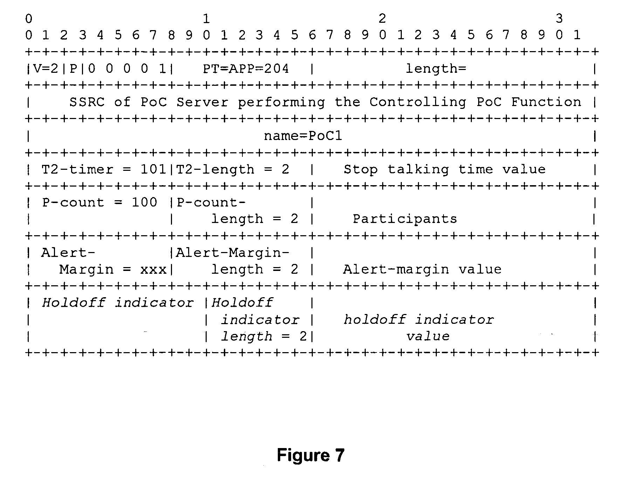

In Figure 7, the existing content of the Talk Burst Granted message is shown with an additional field for the holdoff indicator that has been added to the conventional message shown in italics. The meaning of prior art fields is defined in PoC User Plane Draft Version 2.0. The content, format and significance of the added fields are the same as the description of the Holdoff indicator, Holdoff indicator length, and holdoff indicator value above.

On receipt of the message, the PoC client would note the value provided of the Holdoff indicator. After the end of the talk burst, the client would not send a Talk Burst Request message until at least this time has passed, even if the user indicates a wish to request the floor.

It is explained above that, as another aspect of this invention, a holdoff timer indicator can be added to the Talk Burst Deny message. This message is sent from the PoC Server to the PoC Client to indicate that a request for the floor is denied. The improvement consists of adding a holdoff indicator field at the end of this message.

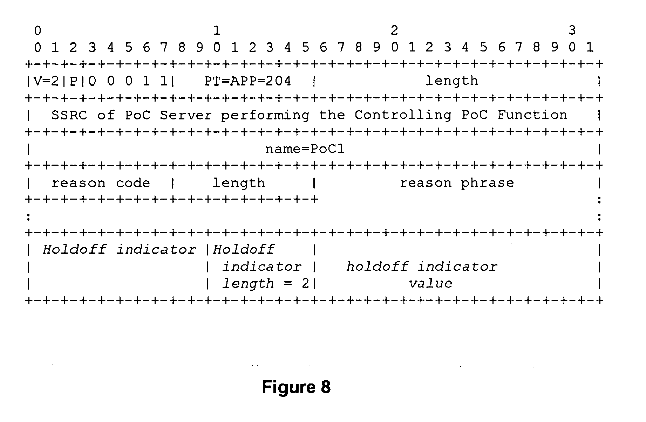

In Figure 8, the existing content of the Talk Burst Deny message is shown, with an additional field for the Holdoff Indicator that has been added to the conventional message shown in italics. The content, format and significance of the added field are the same as the description of the Holdoff indicator, Holdoff indicator length, and holdoff indicator value above.

On receipt of the message, the PoC client would note the value provided of the Holdoff indicator. After receipt of this message the Client would not send a Talk Burst Request message until at least this time has passed, even if the user indicates a wish to request the floor.

It is explained above that, as another aspect of this invention, the holdoff time or the duration of the talk burst can be modified during a talk burst by introducing a message referred to as 'Talk Burst Modify' message.

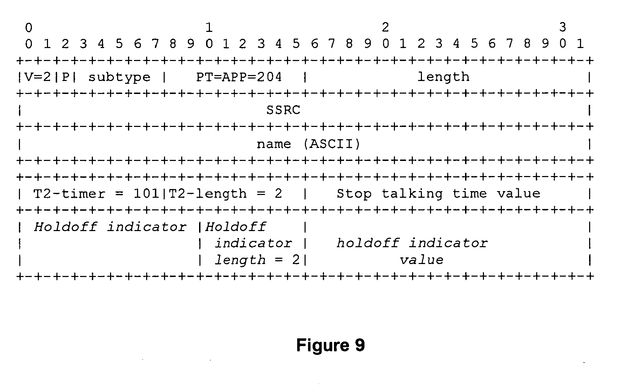

In Figure 9, the content of this message is shown. All field elements apart from the holdoff indicator, are defined in PoC User Plane Draft Version 2.0. The content, format and significance of the added fields are the same as the description of the Holdoff indicator, Holdoff indicator length, and holdoff indicator value above. The value of the message discriminator "subtype" would be chosen to be a fixed value to uniquely discriminate this message from other messages in the TBCP protocol.

On receipt of the message while in control of the floor, the PoC client will note the value provided by the Holdoff indicator. After the end of the talk burst the Client will not send a Talk Burst Request until at least this time has passed, even if the user indicates a wish to request the floor. If a stop talking time value is provided, the client will note the value provided which will supersede previously provided values and will relinquish the floor before the indicated time is expired.

Those skilled in the art will appreciate that although the embodiments of this invention have been described in terms of the specific protocol and functional entities used by the OMA Push to Talk System, it is not limited to the OMA Push to Talk system and could also apply to existing or future systems which provide similar functionality. These include but are not limited to systems including fixed line phones and cordless phones as well as cellular phones.

Equally, although the invention describes the function in terms of voice, those skilled in the art will appreciate that the invention could also apply to other media or combinations of media such as audio and video. Hence, the terms used in this description and the appended claim should be understood as not limited to voice but encompass media in general.

In particular it is envisaged that in a future extension of the OMA system, the name of the floor control protocol may be renamed from TBCP to MBCP (Media Burst Control Protocol), which would reflect the possibility of media other than voice. As a result, instead of the term "Talk", the more generic term "Media" is explicitly encompassed by the present invention.

The method of this invention is preferably implemented on a programmed processor. However, the method may also be implemented on a general purpose or special purpose computer, a programmed microprocessor or microcontroller and peripheral integrated circuit elements, an ASIC or other integrated circuit, a hardware electronic or logic circuit, such as a discrete element circuit, a programmable logic device, such as PLD, PLA, FPGA or PAL, or the like. In general, any device on which resides a finite state machine capable of implementing the flowcharts shown in the Figures may be used to implement the processor functions of this invention.

## Claims

1. A method for controlling a communication floor between a group of clients of a Push to Talk over Cellular, referred to as PoC, communication system in a manner that only one PoC client is allowed to transmit data bursts at a time, comprising the steps of:
requesting by one PoC client permission to transmit data packets using a Talk Burst Request message,
sending by the PoC server a Talk Burst Granted message to the requesting PoC client indicating a temporary exclusive right to transmit data bursts;
wherein said Talk Burst Granted message includes a holdoff indicator field indicating a holdoff time, which inhibits the requesting PoC client from sending another Talk Burst Request message to the PoC server until expiry of the holdoff time.

2. The method according to claim 1, wherein the holdoff time begins following relinquishment of the communication floor at the end of the transmission of data bursts by the requesting PoC client.

3. A method for controlling a communication floor between a group of clients of a Push to Talk over Cellular, referred to as PoC, communication system in a manner that only one PoC client is allowed to transmit data bursts at a time, comprising the steps of:
sending a Talk Burst Idle message to participating PoC clients signalling that no PoC client has permission to send data packets,
wherein said Talk Burst Idle message includes a holdoff indicator field indicating a holdoff time, which inhibits the requesting PoC client from sending a Talk Burst Request message to the PoC server until expiry of the holdoff time.

4. A method for controlling a communication floor between a group of clients of a Push to Talk over Cellular, referred to as PoC, communication system in a manner that only one PoC client is allowed to transmit data bursts at a time, comprising the steps of:
sending by the PoC server a Talk Burst Deny message to a PoC client, which is requesting permission to transmit data packets to indicate that the request is denied,
wherein the Talk Burst Deny message includes a holdoff indicator field indicating a holdoff time, which inhibits the requesting PoC client from sending another Talk Burst Request message to the PoC server until expiry of the holdoff time.

5. A method for controlling a communication floor between a group of clients of a Push to Talk over Cellular, referred to as PoC, communication system in a manner that only one PoC client is allowed to transmit data bursts at a time, comprising the steps of:
sending by the PoC server a Talk Burst Modify message to a PoC client having control of the communication floor to indicate that one or more parameters relating to the previously granted floor control is superceded ,
wherein the Talk Burst Modify message includes a holdoff indicator field indicating a holdoff time, which inhibits the requesting PoC client from sending a Talk Burst Request message to the PoC server until expiry of the holdoff time and supercedes previous values of that parameter.

6. The method according to one of claims 1 to 5 wherein the holdoff indicator field comprises a holdoff indicator, a holdoff indicator length and a holdoff indicator value.

7. The method according to claim 6, wherein the holdoff indicator value is the holdoff time.

8. A communication terminal adapted to carry out the method steps of the PoC client recited in one of claims 1 to 7.

9. A communication server adapted to carry out the method steps of the PoC server recited in one of claims 1 to 7.

10. A communication system comprising a communication terminal according to claim 8 and a communication server according to claim 9.
